(19) **Europäisches Patentamt / European Patent Office / Office européen des brevets**

(11) **EP 4 557 798 A1**

(12) **EUROPEAN PATENT APPLICATION**
published in accordance with Art. 153(4) EPC

(43) Date of publication:
**21.05.2025 Bulletin 2025/21**

(21) Application number: **22951187.8**

(22) Date of filing: **15.07.2022**

(51) International Patent Classification (IPC):
*H04W 16/18* (2009.01)

(52) Cooperative Patent Classification (CPC):
**H04W 16/18**

(86) International application number:
**PCT/JP2022/027846**

(87) International publication number:
**WO 2024/013979 (18.01.2024 Gazette 2024/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NIPPON TELEGRAPH AND TELEPHONE CORPORATION**
**Chiyoda-ku, Tokyo 100-8116 (JP)**

(72) Inventors:
• **KINSHO, Hideaki**
  **Musashino-shi, Tokyo 180-8585 (JP)**
• **TAKESHITA, Kei**
  **Musashino-shi, Tokyo 180-8585 (JP)**

(74) Representative: **Murgitroyd & Company**
**165-169 Scotland Street**
**Glasgow G5 8PL (GB)**

(54) **PERFORMANCE MODEL FORMULATION DEVICE, PERFORMANCE MODEL FORMULATION METHOD, AND PROGRAM**

(57) A performance model construction apparatus according to an aspect of the present disclosure is a performance model construction apparatus that constructs a performance model of each base station constituting a cellular network, the apparatus including an input unit configured to input an accommodated user number observation value representing an observation value of the number of accommodated users of each base station and a performance observation value representing an observation value of predetermined performance related to the base station when the accommodated user number observation value is observed, and a construction unit configured to construct a performance model representing a relationship between the number of accommodated users and the performance using the accommodated user number observation value, the performance observation value, and the number of observations of the accommodated user number observation value and the performance observation value.

**Fig. 2**

EP 4 557 798 A1

**Description**

Technical Field

The present disclosure relates to a performance model construction apparatus, a performance model construction method, and a program.

Background Art

Cellular networks generally include many base stations as elements, and each base station covers a surrounding area. As a result, in the cellular networks, users can perform communications via the base stations around the users.

A range covered by each base station is determined depending on setting values of various parameters and surrounding environmental factors, and one of representative parameters is a tilt angle. Many tilt angle optimization methods for improving performance (for example, throughput) of a base station in a cellular network have been proposed so far. For example, a method of calculating a tilt angle for equalizing the number of accommodated users in each base station has been proposed.

On the other hand, since the performance of the base station is determined based on various factors, the performance of each base station is not necessarily equivalent even if the same number of accommodated users is served. Therefore, a method of constructing a performance model for each base station by utilizing observation data of each base station has been proposed (Non Patent Literature 1).

Citation List

Non Patent Literature

Non Patent Literature 1: Deniz Ustebay and Jie Chuai. "Hierarchical Bayesian Modelling for Wireless Cellular Networks," In Proceedings of the 2019 Workshop on Network Meets AI & ML (NetAI'19), p76-82, Aug. 2019.

Summary of Invention

Technical Problem

However, in Non Patent Literature 1, since modeling is performed by general hierarchical Bayesian modeling, parameters that adjust the balance between the trend of the overall base stations and the trend of each individual base station are uniformly estimated for all base stations. For this reason, for example, it is not possible to perform adjustments, such as constructing a model that focuses on the overall trend for base stations with a small number of observations, and that focuses on individual characteristics for base stations with a large number of observations.

The present disclosure has been made in view of the above points, and provides a technique capable of constructing a performance model in consideration of the number of observations for each base station.

Solution to Problem

A performance model construction apparatus according to an aspect of the present disclosure is a performance model construction apparatus that constructs a performance model of each base station constituting a cellular network, the apparatus including an input unit configured to input an accommodated user number observation value representing an observation value of the number of accommodated users of each base station and a performance observation value representing an observation value of predetermined performance related to the base station when the accommodated user number observation value is observed, and a construction unit configured to construct a performance model representing a relationship between the number of accommodated users and the performance using the accommodated user number observation value, the performance observation value, and the number of observations of the accommodated user number observation value and the performance observation value.

Advantageous Effects of Invention

A technique capable of constructing a performance model in consideration of the number of observations for each base station is provided.

Brief Description of Drawings

[Fig. 1] Fig. 1 is a diagram illustrating an example of a hardware configuration of a performance model construction device according to the present embodiment.

[Fig. 2] Fig. 2 is a diagram illustrating an example of a functional configuration of the performance model construction device according to the present embodiment.

[Fig. 3] Fig. 3 is a diagram illustrating an example of observation data.

[Fig. 4] Fig. 4 is a flowchart illustrating an example of overall processing of performance model construction.

[Fig. 5] Fig. 5 is a flowchart illustrating an example of detailed processing of the performance model construction.

[Fig. 6] Fig. 6 is a diagram for illustrating a calculation example of a parameter a.

Description of Embodiments

Hereinafter, embodiments of the present invention will be described. In the following embodiment, a performance model construction device 10 that constructs a performance model in consideration of the number of observations for each base station when constructing a performance model of each base station will be described. In the following, as an example, a throughput is assumed as the performance of the base station. However, the performance of the base station is not limited to the throughput, and the present embodiment can be similarly applied to various performance characteristics other than the throughput.

Here, it is assumed that observation data D including observation information of each base station is given to the performance model construction device 10. The observation information is any statistic that has been already observed in a real network. Hereinafter, as an example, it is assumed that the observation information of each base station includes the number of accommodated users and the throughput of the base station at each time. Further, hereinafter, a total number of base stations is denoted by N, and an i-th (where i = 1,..., N) base station is denoted by $BS_i$.

<Hardware Configuration Example of Performance Model Construction Device 10>

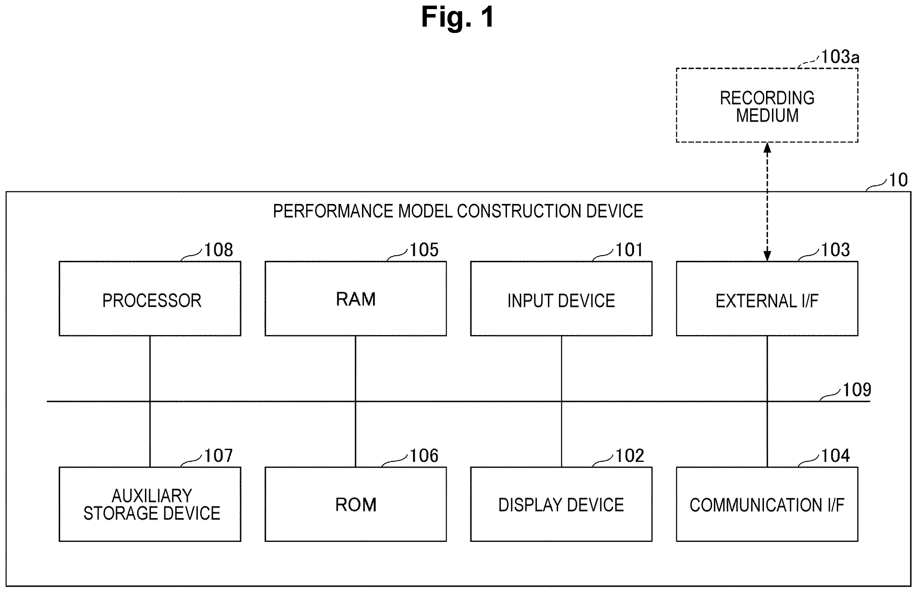

Fig. 1 illustrates a hardware configuration example of the performance model construction device 10 according to the present embodiment. As illustrated in Fig. 1, the performance model construction device 10 according to the present embodiment includes an input device 101, a display device 102, an external I/F 103, a communication I/F 104, a random access memory (RAM) 105, a read only memory (ROM) 106, an auxiliary storage device 107, and a processor 108. These hardware components are communicatively connected to one another via a bus 109.

The input device 101 includes, for example, a keyboard, a mouse, a touch panel, a physical button, and/or the like. The display device 102 is, for example, a display, a display panel, or the like. The performance model construction device 10 may not include, for example, at least one of the input device 101 or the display device 102.

The external I/F 103 is an interface with an external device such as a recording medium 103a. The performance model construction device 10 can perform reading or writing with respect to the recording medium 103a via the external I/F 103. Examples of the recording medium 103a include a flexible disk, a compact disc (CD), a digital versatile disk (DVD), a secure digital memory card (SD memory card), a universal serial bus (USB) memory card, and the like.

The communication I/F 104 is an interface for the performance model construction device 10 to communicate with other apparatuses, devices, and the like. The RAM 105 is a volatile semiconductor memory (storage device) that temporarily holds programs and data. The ROM 106 is a nonvolatile semiconductor memory (storage device) capable of holding programs and data even when the power is turned off. The auxiliary storage device 107 is, for example, a storage device (storage device) such as a hard disk drive (HDD), a solid state drive (SSD), or a flash memory. The processor 108 is, for example, an arithmetic device such as a central processing unit (CPU) or a graphics processing unit (GPU).

The performance model construction device 10 according to the present embodiment has the hardware configuration illustrated in Fig. 1 and can thus implement various processes that will be described below. The hardware configuration illustrated in Fig. 1 is an example, and a hardware configuration of the performance model construction device 10 is not limited to the above example. For example, the performance model construction device 10 may include a plurality of auxiliary storage devices 107 and/or a plurality of processors 108, may not include a part of the illustrated hardware, or may include various hardware components other than the illustrated hardware.

<Functional Configuration Example of Performance Model Construction Device 10>

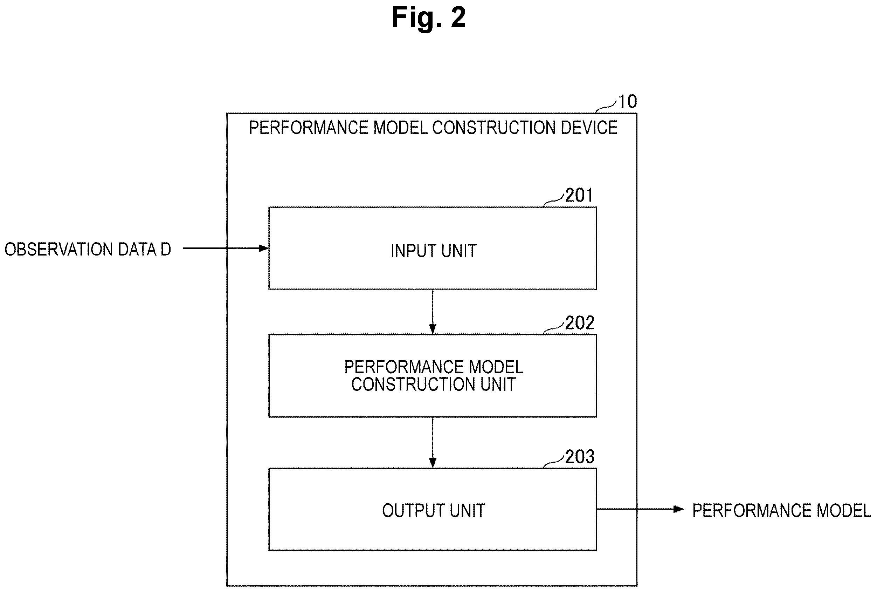

Fig. 2 illustrates a functional configuration example of the performance model construction device 10 according to the present embodiment. As illustrated in Fig. 2, the performance model construction device 10 according to the present embodiment includes an input unit 201, a performance model construction unit 202, and an output unit 203. Each of these units is implemented, for example, by processing executed by the processor 108 using one or more programs that are installed in the performance model construction device 10.

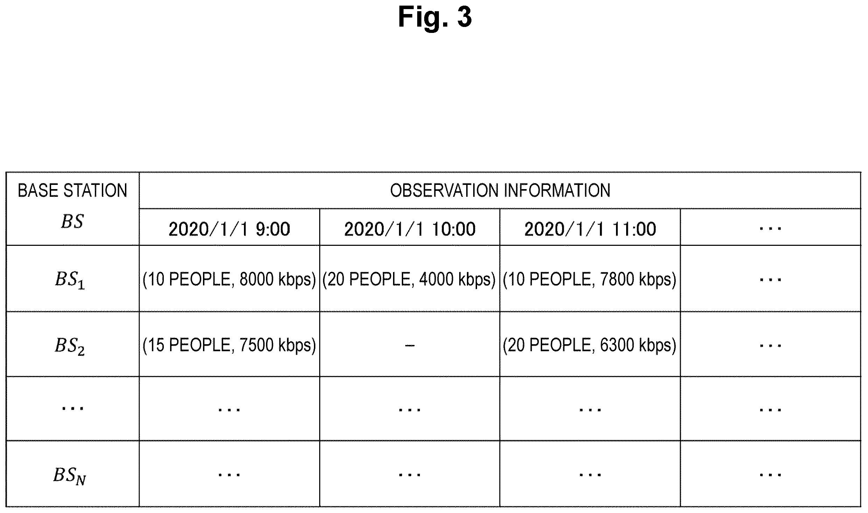

The input unit 201 inputs given observation data D. Here, an example of the observation data D is illustrated in Fig. 3. As illustrated in Fig. 3, the observation data D includes, for each base station $BS_i$, observation information (the number of accommodated users and throughput) of the base station $BS_i$ at each time. Note that the time may include not only an hour and minutes but also a year, month, and day, and may further include seconds (in the example illustrated in Fig. 3, the time is represented by a year, month, day, hour, and minute).

The observation data D illustrated in Fig. 3 includes the observation information of the base station $BS_1$ from the time "9:00, January 1, 2020" to "11:00, January 1, 2020." On the other hand, the observation data D illustrated in Fig. 3 includes the observation information of the base station $BS_2$ at the time "9:00, January 1, 2020" and "11:00, January 1, 2020," but does not include the observation information of the base station $BS_2$ at the time "10:00, January 1, 2020." This means that the number of accommodated users and the throughput of the base station $BS_2$ at the time "10:00, January 1, 2020" are not observed. As described above, in a case where the number of accommodated users and the throughput of a certain base station are not observed at a certain time, the observation information of the base station at the time is not included in the observation data D.

In general, if observation information of the base station $BS_i$ at the time t is given as $d_t^{(i)}$, the observation data D can be expressed as $D=\{d_t^{(i)}|i = 1,..., N, t \in T_i\}$. In addition, if the number of accommodated users of the base station $BS_i$ at the time t is given as $x_t^{(i)}$ and the throughput is given as $y_t^{(i)}$, observation information $d_t^{(i)}$ can be expressed as $d_t^{(i)} = (x_t^{(i)}, y_t^{(i)})$. Here, $T_i$ is a set of times when the number of accommodated users in the base station $BS_i$ and the throughput are observed. At this time, the number of elements of $T_i$, that is, $|T_i|$ is the number of observations of the base station $BS_i$.

Using the observation information included in the observation data D that is input by the input unit 201, the performance model construction unit 202 constructs, for each base station $BS_i$, a model (performance model) representing the relationship between the number of accommodated users in the base station $BS_i$ and the throughput. At this time, the performance model construction unit 202 constructs a performance model in consideration of the number of observations of the base station $BS_i$. Details of a construction method of the performance model will be described later.

The output unit 203 outputs the performance model constructed by the performance model construction unit 202 to a predetermined output destination set in advance. Note that the output unit 203 may output the performance model to, for example, a server device or the like that is connected via a communication network such as the Internet, may output the performance model to the display device 102 such as a display, or may output the performance model to a storage device such as the auxiliary storage device 107.

<Overall Processing of Performance Model Construction>

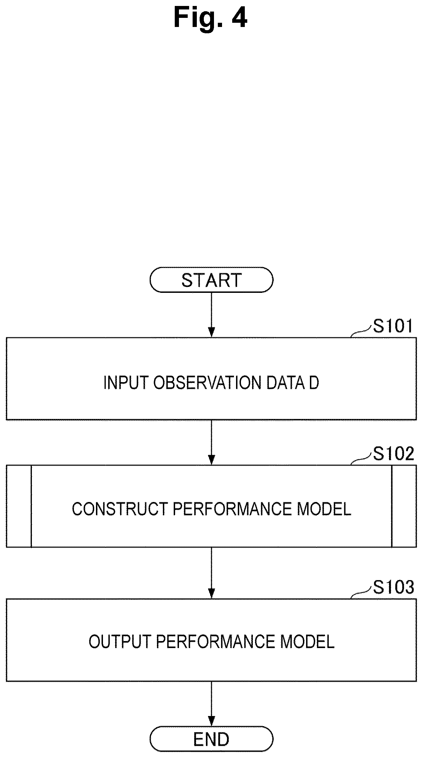

The overall processing of the performance model construction will be described below with reference to Fig. 4.

First, the input unit 201 inputs given observation data D (step S101).

Next, the performance model construction unit 202 constructs, for each base station $BS_i$, a performance model representing the relationship between the number of accommodated users by the base station $BS_i$ and the throughput, with use of observation information included in the observation data D input in step S101 described above (step S102). Note that details of the processing of this step will be described later.

Then, the output unit 203 outputs the performance model (performance model for each base station $BS_i$) constructed in step S102 described above, to a predetermined output destination that is set in advance (step S103).

<<Detailed Processing of Performance Model Construction>>

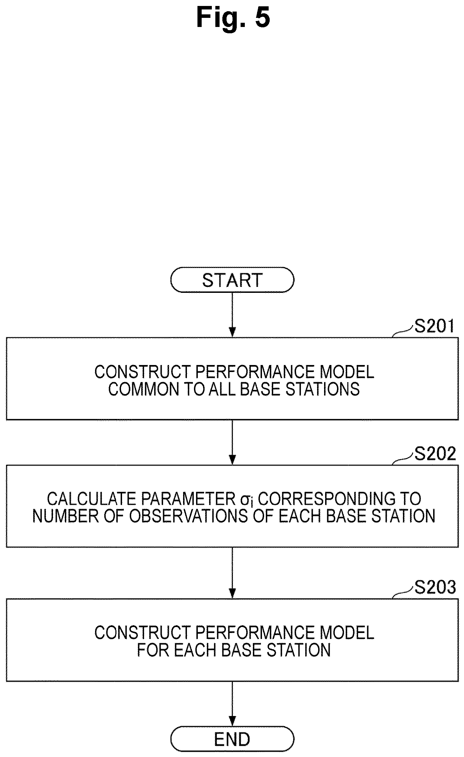

Hereinafter, the detailed processing of constructing the performance model in step S102 will be described with reference to Fig. 5.

First, the performance model construction unit 202 constructs the performance model that is common to all base stations using the observation information included in the observation data D (step S201). Hereinafter, it is assumed that the performance model is expressed in a form of $y = \exp(\beta x + \gamma)$. Here, y is the throughput, x is the number of accommodated users, and $\beta$ and $\gamma$ are parameters.

The performance model construction unit 202 may estimate the parameters $\beta$ and $\gamma$ of the performance model common to all the base stations, based on Bayesian modeling, for example. In a case where the parameters $\beta$ and $\gamma$ are estimated based on the Bayesian modeling, first, the performance model construction unit 202 estimates, for example, the following model parameters $\sigma$, $\beta$, and $\gamma$.

$$y\sim\text{Norm}(\exp(\beta x+\gamma),\sigma)$$

Here, $\sigma$, $\beta$, and $\gamma$ are as follows.

$\sigma\sim\text{HalfNorm}(10^4)$
$\beta\sim\text{Norm}(0,10^4)$
$\gamma\sim\text{Norm}(0,10^4)$

In this model, it is assumed that the throughput y follows a Gaussian distribution (normal distribution) with an average $\exp(\beta x+\gamma)$ and a standard deviation $\sigma$, a prior distribution for the parameter $\sigma$ is given as a semi-normal distribution as a noninformative prior distribution, and also, a prior distribution for the parameters $\beta$ and $\gamma$ is given as a normal distribution as the noninformative prior distribution.

At this time, the performance model construction unit 202 learns the posterior distribution for the parameters $\sigma$, $\beta$, and $\gamma$ to maximize the probability of occurrence of the observation information, by using a Markov Chain Monte Carlo (MCMC) method with respect to the above model.

Then, the performance model construction unit 202 may set the performance model common to all the base stations to $y = \exp(\mu_\beta x + \mu_\gamma)$ by using, for example, an average value $\mu_\beta$ of $\beta$ after learning and an average value $\mu_\gamma$ of y after learning. Hereinafter, the performance model $y = \exp(\mu_\beta x + \mu_\gamma)$ common to all base stations is described as being constructed.

Note that the estimation method for the parameters $\beta$ and $\gamma$ is not limited to the Bayesian modeling, and for example, the parameters $\beta$ and $\gamma$ may be estimated by a least squares method. In a case where the parameters $\beta$ and $\gamma$ are estimated by the least squares method, the performance model construction unit 202 may obtain the parameters $\beta$ and $\gamma$ that minimize the sum of squares of the difference between $y_t^{(i)}$ and $\exp(\beta x_t^{(i)} + \gamma)$ for $i = 1,..., N$ and $t \in T_i$.

Next, the performance model construction unit 202 calculates a parameter $\sigma_i$ corresponding to the number of observations of each base station $BS_i$ (step S202). The parameter $\sigma_i$ is a parameter representing the magnitude of variation from the parameter $\mu_\beta$ (that is, one of parameters indicating the trend of all the base stations) estimated in step S201 above for the base station $BS_i$.

For example, the performance model construction unit 202 may calculate the parameter $\sigma_i$ for the base station $BS_i$ by the following equation based on a sigmoid function.

[Math. 1]

$$\sigma_i = \frac{b}{1 + e^{-a(n_i-c)}}$$

Here, $n_i$ is the number of observations of the base station $BS_i$, that is, $n_i = |T_i|$. In addition, a, b, and c are parameters. In particular, a is a parameter for determining smoothness of the function shown in Equation 1 above, b is a parameter for determining an upper limit value of the function shown in Equation 1 above, and c is a parameter for determining a center of the function shown in Equation 1 above.

For example, the parameters a, b, and c may be determined based on observation information, or may be determined by a hyperparameter optimization method such as grid search or Bayesian optimization.

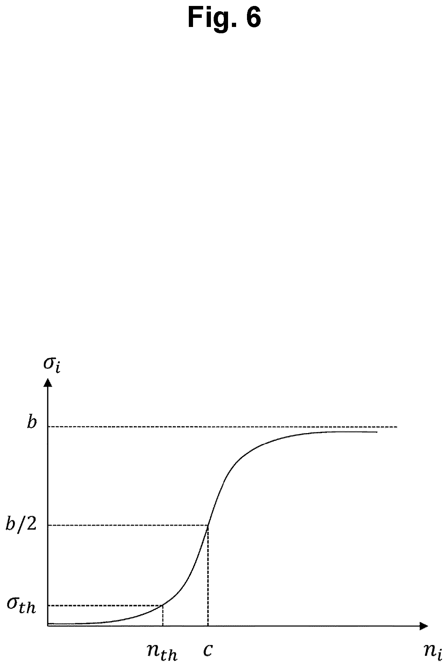

As an example, Fig. 6 illustrates a calculation example of the parameter $\sigma_i$ for the base station $BS_i$. In the example illustrated in Fig. 6, when the vertical axis expresses $\sigma_i$ and the horizontal axis expresses $n_i$, the parameter a is determined to pass through $(n_i, \sigma_i) = (n_{th}, \sigma_{th})$. That is, the parameter a is defined as follows.

[Math. 2]

$$a = -\frac{1}{n_{th} - c}\log\frac{b - \sigma_{th}}{\sigma_{th}}$$

Here, as a value of $n_{th}$, for example, it is conceivable to calculate a maximum value of the number of observations for which the performance model cannot be modeled well only using observation information of the base station alone by data analysis or the like in advance, and to then set the maximum value. Furthermore, it is conceivable that the value of $\sigma_{th}$ is set to $|\mu_\beta/3|$ using, for example, the parameter $\mu_\beta$ for the performance model common to all the base stations. This means that, in sampling by the MCMC method, the sampling value exists in the range of $(2\mu_\beta, 0)$ with a probability of 99.7%. As a result, in a case where the number of observations of a certain base station $BS_i$ is small, a parameter $\beta_i$ to be described later is prevented from becoming a positive number, and a situation in which the performance model cannot be modeled well can be avoided.

In addition, the parameter b may be, for example, $||\mu_\beta|-max(|\beta_i'|)|$ using a parameter $\beta_i'$ when the performance model is modeled only with the observation information of the base station alone.

Finally, the performance model construction unit 202 constructs a performance model for each base station $BS_i$ using the observation information included in the observation data D, the parameters $\mu_\beta$ and $\mu_\gamma$ obtained in step S201 described above, and the parameter $\sigma_i$ (i = 1,..., N) obtained in step S202 described above (step S203).

The performance model construction unit 202 constructs a performance model of each base station $BS_i$ by hierarchical Bayesian modeling. Specifically, assuming that the throughput of the base station $BS_i$ is $y_i$, the performance model construction unit 202 first estimates, for example, parameters $\sigma$, $\beta_i$, and $\gamma_i$ of the following model.

$$y_i \sim Norm(exp(\beta_i x + \gamma_i), \sigma)$$

Here, $\sigma$, $\beta_i$, and $\gamma_i$ are as follows.

$$\sigma \sim HalfNorm(10^4)$$

$$\beta_i \sim Norm(\mu_\beta, \sigma_i)$$

$$\gamma_i \sim Norm(\mu_\gamma, \sigma_i')$$

Here, the following Expression is established. $\sigma_i' \sim HalfNorm(10^4)$

In this model, the throughput $y_i$ of the base station $BS_i$ follows a Gaussian distribution with a mean $exp(\beta_i x + \gamma_i)$ and a standard deviation $\sigma$, $\beta_i$ follows a Gaussian distribution with a mean $\mu_\beta$ and a standard deviation $\sigma_i$, $\gamma_i$ follows a Gaussian distribution with a mean $\mu_\gamma$ and a standard deviation $\sigma_i'$, and $\sigma_i'$ follows a non-information prior distribution of a semi-normal distribution. Here, the trade-off between complete pooling and no pooling is adjusted for each base station by using the parameter $\sigma_i$ obtained in step S202 above for the prior distribution of $\beta_i$.

At this time, the performance model construction unit 202 learns the posterior distribution of the parameters $\sigma$, $\beta_i$, and $\gamma_i$ for the above model by the MCMC method to maximize the appearance probability of the observation information.

Then, the performance model construction unit 202 uses, for example, the average value $\mu_{\beta\_i}$ of $\beta_i$ after learning (where, "β_i" represents $\beta_i$) and the average value $\mu_{\gamma\_i}$ of $\gamma_i$ after learning (where, "γ_i" represents $\gamma_i$), the performance model of the base station $BS_i$ is expressed as follows.

[Math. 3]

$$y = \exp\left(\mu_{\beta_i} x + \mu_{\gamma_i}\right)$$

<Summary>

As described above, the performance model construction device 10 according to the present embodiment calculates the parameter $\sigma_i$ representing the magnitude of the variation from $\mu_\beta$, which is one of the parameters representing the trend of the overall base stations, according to the number of observations of each base station, and then the performance model construction device 10 constructs the performance model in which the balance between the trend of the overall base stations and the trend of the base station $BS_i$ alone is adjusted using the parameter $\sigma_i$. As a result, for example, it is possible to construct a performance model in which a base station having a small number of observations focuses on the overall trend, while a base station having a large number of observations focuses on its own characteristics.

<Modifications>

Hereinafter, modifications of the above embodiment will be described.

• Modification 1

In the above embodiment, the performance model common to all the base stations is constructed in step S202 in Fig. 5, but instead of this, the performance model common to the attributes may be constructed for each arbitrary attribute (for example, a frequency band) of each base station. In this case, the parameter $\sigma_i$ represents the magnitude of variation from $\mu_\beta$, which is one of the parameters representing the trend of the performance model having the common attribute.

• Modification 2

In the above embodiment, the performance model for each base station is constructed in step S203 of Fig. 5, but instead of this, the performance model for each sector of the base station may be constructed, or the performance model for each carrier may be constructed.

• Modification 3

Modification 1 and Modification 2 above may be combined.
The present invention is not limited to the foregoing specifically disclosed embodiment, and various modifications, changes, combinations with known technique, and the like can be made without departing from the scope of the claims.

Reference Signs List

| | |
|---|---|
| 10 | Performance model construction device |
| 101 | Input device |
| 102 | Display device |
| 103 | External I/F |
| 103a | Recording medium |
| 104 | Communication I/F |
| 105 | RAM |
| 106 | ROM |
| 107 | Auxiliary storage device |
| 108 | Processor |
| 109 | Bus |
| 201 | Input unit |
| 202 | Performance model construction unit |
| 203 | Output unit |

**Claims**

1. A performance model construction apparatus that constructs a performance model of each base station constituting a cellular network, the apparatus comprising:

   an input unit configured to input an accommodated user number observation value representing an observation value of the number of accommodated users of each base station and a performance observation value representing an observation value of predetermined performance related to the base station when the accommodated user number observation value is observed; and
   a construction unit configured to construct a performance model representing a relationship between the number of accommodated users and the performance using the accommodated user number observation value, the performance observation value, and the number of observations of the accommodated user number observation value and the performance observation value.

2. The performance model construction apparatus according to claim 1, wherein the construction unit is configured to

calculate a parameter $\sigma_i$ corresponding to the number of observations of a base station $BS_i$ for each of base stations $BS_i$ by setting an i-th (where $1 \leq i \leq N$, and N is the total number of base stations) base station as $BS_i$, and construct, for each of the base stations $BS_i$, the performance model in which trends of all base stations $\{BS_1,..., BS_N\}$ and trends of the base station $BS_i$ regarding a relationship between the number of accommodated users and the performance are adjusted using the parameter $\sigma_i$ by hierarchical Bayesian modeling.

3. The performance model construction apparatus according to claim 1, wherein the construction unit is configured to

calculate a parameter $\sigma_i$ corresponding to the number of observations of a base station $BS_i$ for each of base stations $BS_i$ by setting an i-th (where $1 \leq i \leq N$, and N is the total number of base stations) base station as $BS_i$, and construct, for each of the base stations $BS_i$, a performance model in which a trend of a base station $\{BS_j \mid BS_j$ is a base station having the same attribute$\}$ having a predetermined same attribute and a trend of the base station $BS_i$ are adjusted using the parameter $\sigma_i$ with respect to a relationship between the number of accommodated users and the performance by hierarchical Bayesian modeling.

4. The performance model construction apparatus according to claim 3, wherein the base stations having the same attribute $\{BS_j \mid BS_j$ is a base station having the same attribute$\}$ are a set of base stations using the same frequency band.

5. The performance model construction apparatus according to claim 1, wherein the construction unit is configured to

calculate a parameter $\sigma_i$ corresponding to the number of observations of a base station $BS_i$ for each of base stations $BS_i$ by setting an i-th (where $1 \leq i \leq N$, and N is the total number of base stations) base station as $BS_i$, and construct, for each of the base stations $BS_i$, the performance model in which a trend of a base station in the same sector or carrier $\{BS_j \mid BS_j$ is a base station of the same sector or the same carrier$\}$ and a trend of the base station $BS_i$ are adjusted using the parameter $\sigma_i$ with respect to a relationship between the number of accommodated users and the performance by hierarchical Bayesian modeling.

6. The performance model construction apparatus according to any one of claims 2 to 5, wherein the construction unit is configured to
calculate the parameter $\sigma_i$, which has a larger value as the number of observations of the base station $BS_i$ becomes larger, and calculate the parameter $\sigma_i$, which has a smaller value as the number of observations of the base station $BS_i$ is smaller.

7. A performance model construction method executed by a performance model construction apparatus that constructs a performance model of each base station constituting a cellular network, the method comprising:

an input procedure of inputting an accommodated user number observation value representing an observation value of the number of accommodated users of each base station and a performance observation value representing an observation value of predetermined performance related to the base station when the accommodated user number observation value is observed; and
a construction procedure of constructing a performance model representing a relationship between the number of accommodated users and the performance using the accommodated user number observation value, the performance observation value, and the number of observations of the accommodated user number observation value and the performance observation value.

8. A program for causing a performance model construction apparatus that constructs a performance model of each base station constituting a cellular network to execute:

an input procedure of inputting an accommodated user number observation value representing an observation value of the number of accommodated users of each base station and a performance observation value representing an observation value of predetermined performance related to the base station when the accommodated user number observation value is observed; and
a construction procedure of constructing a performance model representing a relationship between the number of accommodated users and the performance using the accommodated user number observation value, the performance observation value, and the number of observations of the accommodated user number observation value and the performance observation value.

**Fig. 1**

PERFORMANCE MODEL CONSTRUCTION DEVICE 10

RECORDING MEDIUM 103a

PROCESSOR 108

RAM 105

INPUT DEVICE 101

EXTERNAL I/F 103

109

AUXILIARY STORAGE DEVICE 107

ROM 106

DISPLAY DEVICE 102

COMMUNICATION I/F 104

EP 4 557 798 A1

# Fig. 2

PERFORMANCE MODEL CONSTRUCTION DEVICE ~10

OBSERVATION DATA D → 

INPUT UNIT ~201

↓

PERFORMANCE MODEL CONSTRUCTION UNIT ~202

↓

OUTPUT UNIT ~203 → PERFORMANCE MODEL

**Fig. 3**

| BASE STATION $BS$ | OBSERVATION INFORMATION | | | |
|---|---|---|---|---|
| | 2020/1/1 9:00 | 2020/1/1 10:00 | 2020/1/1 11:00 | $\cdots$ |
| $BS_1$ | (10 PEOPLE, 8000 kbps) | (20 PEOPLE, 4000 kbps) | (10 PEOPLE, 7800 kbps) | $\cdots$ |
| $BS_2$ | (15 PEOPLE, 7500 kbps) | − | (20 PEOPLE, 6300 kbps) | $\cdots$ |
| $\cdots$ | $\cdots$ | $\cdots$ | $\cdots$ | $\cdots$ |
| $BS_N$ | $\cdots$ | $\cdots$ | $\cdots$ | $\cdots$ |

# Fig. 4

```
        ( START )
            |
            v
                                            S101
+-------------------------------------------+
|                                           |
|         INPUT OBSERVATION DATA D          |
|                                           |
+-------------------------------------------+
            |
            v
                                            S102
+-------------------------------------------+
| |                                       | |
| |      CONSTRUCT PERFORMANCE MODEL      | |
| |                                       | |
+-------------------------------------------+
            |
            v
                                            S103
+-------------------------------------------+
|                                           |
|         OUTPUT PERFORMANCE MODEL          |
|                                           |
+-------------------------------------------+
            |
            v
         ( END )
```

# Fig. 5

START

$\swarrow$S201

CONSTRUCT PERFORMANCE MODEL
COMMON TO ALL BASE STATIONS

$\swarrow$S202

CALCULATE PARAMETER $\sigma_i$ CORRESPONDING TO
NUMBER OF OBSERVATIONS OF EACH BASE STATION

$\swarrow$S203

CONSTRUCT PERFORMANCE MODEL
FOR EACH BASE STATION

END

# Fig. 6

## INTERNATIONAL SEARCH REPORT

| International application No. |
|---|
| **PCT/JP2022/027846** |

**A. CLASSIFICATION OF SUBJECT MATTER**

*H04W 16/18*(2009.01)i
FI: H04W16/18

According to International Patent Classification (IPC) or to both national classification and IPC

**B. FIELDS SEARCHED**

Minimum documentation searched (classification system followed by classification symbols)

H04W16/18

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | US 2021/0037441 A1 (CHARTER COMMUNICATIONS OPERATING, LLC) 04 February 2021 (2021-02-04)<br>entire text, all drawings | 1-8 |
| A | US 2015/0341211 A1 (ACCENTURE GLOBAL SERVICES LTD.) 26 November 2015 (2015-11-26)<br>entire text, all drawings | 1-8 |
| A | US 2017/0343640 A1 (HERE GLOBAL B. V.) 30 November 2017 (2017-11-30)<br>entire text, all drawings | 1-8 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 September 2022** | **13 September 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/027846**

| Patent document cited in search report | | | Publication date (day/month/year) | Patent family member(s) | | | Publication date (day/month/year) |
|---|---|---|---|---|---|---|---|
| US | 2021/0037441 | A1 | 04 February 2021 | (Family: none) | | | |
| US | 2015/0341211 | A1 | 26 November 2015 | EP | 2947910 | A2 | |
| | | | | entire text, all drawings | | | |
| US | 2017/0343640 | A1 | 30 November 2017 | WO | 2016/096010 | A1 | |
| | | | | entire text, all drawings | | | |
| | | | | EP | 3234627 | A1 | |
| | | | | CN | 107250829 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DENIZ USTEBAY** ; **JIE CHUAI**. Hierarchical Bayesian Modelling for Wireless Cellular Networks. *Proceedings of the 2019 Workshop on Network Meets AI & ML (NetAI'19)*, August 2019, 76-82